# FASCICULE DE BREVET EUROPEEN

(11) **EP 3 360 073 B1**
(45) Date de publication et mention de la délivrance du brevet: **21.08.2019**
(21) Numéro de dépôt: 16790646.0
(22) Date de dépôt: 03.10.2016
(51) Int. Cl.: G06F 21/87, H01L 23/00, H01L 27/144

(54) **CONTREMESURES POUR ATTAQUES PAR INJECTION DE FAUTES PAR IMPULSIONS OPTIQUES ET ÉLECTROMAGNÉTIQUES**
GEGENMASSNAHMEN FÜR FEHLERINJEKTIONSATTACKEN DURCH OPTISCHE UND ELEKTROMAGNETISCHE IMPULSE
COUNTERMEASURES FOR FAULT-INJECTION ATTACKS BY OPTICAL AND ELECTROMAGNETIC PULSES

(30) Priorité: 06.10.2015 FR 1559497
(43) Date de publication de la demande: 15.08.2018
(73) Titulaire: Inside Secure, 13590 Meyreuil (FR)
(72) Inventeur: MARTIN, Michel, 13840 Rognes (FR)
(74) Mandataire: de Jong, Jean Jacques
(86) Numéro de dépôt international: PCT/FR2016/052522
(87) Numéro de publication internationale: WO 2017/060594

(56) Documents cités:
- WO-A2-03/102510
- FR-A1- 2 985 059
- NAOFUMI HOMMA ET AL: "EM Attack Is Non-Invasive? - Design Methodology and Validity Verification of EM Attack Sensor", INTERNATIONAL ASSOCIATION FOR CRYPTOLOGIC RESEARCH,, vol. 20140718:070507, 11 juillet 2014 (2014-07-11), pages 1-16, XP061016639,

## Description

### Domaine technique

L'invention est relative à la prévention d'attaques par injection de fautes dans des circuits intégrés sécurisés.

### Arrière-plan

Une injection de faute peut être due à un basculement intempestif de l'état logique d'une brique de circuit numérique dans un circuit intégré en cours de fonctionnement. Un tel basculement peut être provoqué volontairement à l'aide d'un faisceau laser dirigé sur le drain ou la source d'un transistor MOS ou d'un champ électromagnétique dirigé dans une boucle formée par des pistes conductrices interconnectant des portes logiques élémentaires ou des transistors à l'intérieur d'une porte élémentaire En injectant ainsi des fautes à des endroits stratégiques et de manière synchronisée sur le fonctionnement du circuit, une personne malveillante peut révéler des informations sécurisées, comme des clés de chiffrement.

Pour détecter des attaques par faisceau laser, le circuit peut être pourvu de capteurs optiques distribués dans le circuit, avec une densité plus élevée autour d'éléments clé du circuit.

L'article du journal Sensors 2013, volume 13, pages 6713-6729, « Reset Tree-Based Optical Fault Détection », propose d'utiliser comme capteurs optiques des amplificateurs tampon prévus dans l'arbre de réinitialisation du circuit intégré. Un amplificateur tampon est en fait formé de deux inverseurs consécutifs, chacun étant sensible à une injection de faute par faisceau laser. Les sorties de ces amplificateurs, à 1 en fonctionnement normal, sont comparées par une porte ET. Lorsqu'au moins un des amplificateurs tampon bascule du fait d'une injection de faute, la sortie de la porte ET passe temporairement à 0. Ce passage à 0 est mémorisé dans une bascule qui sert à signaler la faute. Le signalement peut être utilisé par un logiciel pour prendre des mesures préventives, ou tout simplement pour réinitialiser le circuit.

WO 03/102510 décrit l'utilisation de plusieurs capteurs de radiation dispersés à travers un circuit intégré et placés proches des circuits sensibles de manière à détecter une attaque par injection de faute en se basant sur la radiation.

FR 2985059 divulgue un dispositif de sécurisation de composants électroniques contre des attaques par injection de fautes au moyen d'une source lumineuse et des composants inductifs comme capteurs de radiation.

L'article "EM Attack is Non-Invasive? - Design Methodology and Validity Vérification of EM Attack Sensor" de Naofumi Homma et al, International Association for Cryptologic Research, pages 1-16, propose l'utilisation d'un couple de capteurs inductifs de manière à augmenter la précision de la détection d'une attaque par impulsions électromagnétiques.

Il est en pratique difficile de protéger par des capteurs tout emplacement pouvant servir à une injection de faute et les capteurs optiques ne sont en général pas adaptés à la détection d'impulsions électromagnétiques. Pour cela les circuits sécurisés peuvent intégrer d'autres contremesures pour prévenir les attaques, comme l'utilisation de circuits redondants permettant une double vérification de résultat.

### Résumé

On prévoit de façon générale un circuit intégré protégé contre des attaques par injection de fautes, comprenant un réseau de capteurs optiques ; une bascule de surveillance connectée aux capteurs optiques pour signaler une faute lorsqu'au moins un des capteurs optiques change d'état ; et des bobinages inductifs connectés dans le réseau, chaque bobinage étant configuré pour générer une tension induite provoquant le basculement d'au moins un des capteurs optiques lorsque le bobinage est soumis à un flux électromagnétique susceptible de provoquer une injection de faute dans le circuit.

Un bobinage inductif peut être connecté en série avec un capteur optique respectif.

Un capteur optique peut comprendre une bascule et l'un des bobinages inductifs peut être connecté entre des éléments de la bascule.

Un bobinage inductif peut être plat et formé par des pistes bobinées en spirale sur un niveau de métal du circuit.

Un bobinage inductif peut être un solénoïde formé par des pistes bobinées sur différents niveaux de métal du circuit.

Les capteurs optiques peuvent être alimentés à une tension inférieure à la tension d'alimentation nominale du circuit intégré.

Les capteurs optiques peuvent être connectés en chaîne et les bobinages être insérés dans des liaisons entre les capteurs.

### Description sommaire des dessins

Des modes de réalisation seront exposés dans la description suivante, faite à titre non limitatif en relation avec les figures jointes parmi lesquelles :
- la figure 1 représente schématiquement un réseau de capteurs optiques pouvant servir à détecter des tentatives d'injection de fautes par faisceau laser dans un circuit intégré en fonctionnement ;
- la figure 2 représente schématiquement un mode de réalisation de réseau de capteurs optiques et électromagnétiques pouvant servir à détecter des tentatives d'injection de fautes par faisceau laser et par impulsion électromagnétique ;
- la figure 3 représente schématiquement un détail d'un capteur optique à bascule, et la connexion d'un bobinage de détection d'impulsions électromagnétiques ;
- la figure 4 est un graphe illustrant une amélioration de la sensibilité des capteurs en fonction de leur tension d'alimentation ; et
- la figure 5 représente schématiquement un autre mode de réalisation de réseau de capteurs optiques et électromagnétiques.

### Description de modes de réalisation

Les capteurs optiques proposés par l'article susmentionné de Sensors 2013 sont formés à partir d'amplificateurs tampon d'un arbre de réinitialisation, et sont donc soumis aux contraintes de conception, notamment de nombre et de placement, de l'arbre de réinitialisation. Cela limite les possibilités de couverture des zones à risque pour les fautes d'injection.

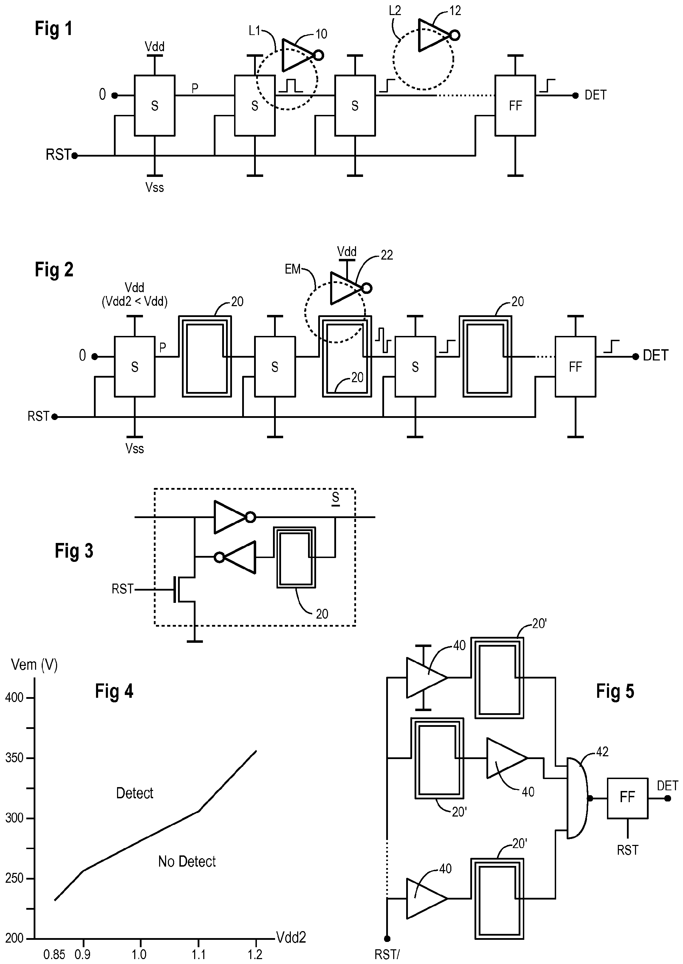

La figure 1 représente schématiquement un réseau de capteurs optiques indépendants S, qui ne sont pas soumis à des contraintes de conception d'autres éléments. Leur structure, leur emplacement et leur nombre sont ainsi libres et adaptables aux besoins spécifiques du circuit à protéger.

Les capteurs S sont chaînés, c'est-à-dire que chaque capteur comprend une entrée de propagation qui est reliée à une sortie de propagation P du capteur précédent. L'entrée de propagation du premier capteur S est reliée à un niveau logique représentatif d'un fonctionnement normal, par exemple 0. La sortie de propagation du dernier capteur est reliée à une bascule de surveillance FF connectée pour mémoriser tout passage par un état actif de la sortie de propagation du dernier capteur S. La bascule FF produit un signal de détection de faute DET. Les capteurs S et la bascule FF peuvent être alimentés entre les lignes d'alimentation Vdd et Vss du circuit intégré.

Chacun des capteurs S est conçu pour relayer toute activation de son entrée de propagation au capteur suivant et pour être lui-même sensible aux injections de faute, lesquelles fautes sont répercutées sur la sortie de propagation du capteur.

Pour cela, les capteurs S pourraient être de simples amplificateurs tampon. Alors un capteur quelconque de la chaîne qui reçoit un flux laser produit une impulsion sur sa sortie qui est propagée de capteur en capteur jusqu'à la bascule FF. L'impulsion provoque le changement d'état de la bascule FF et la signalisation d'une faute.

La chaîne de capteurs pouvant être longue et l'injection de faute pouvant être courte, l'impulsion propagée pourrait être atténuée ou perdue dans certains cas. Il est préférable que les capteurs propagent un état plutôt qu'une impulsion. Ainsi, chaque capteur S peut intégrer une bascule qui commute à un état actif à l'apparition d'un front actif sur l'entrée de propagation. L'état actif du premier capteur qui commute est alors propagé de capteur en capteur jusqu'à la bascule de surveillance FF.

Si les capteurs S intègrent des bascules, ces bascules, ainsi que la bascule FF, sont connectées pour être réinitialisées par un signal RST de réinitialisation générale du circuit intégré.

Selon leur structure, les capteurs optiques S peuvent être sensibles également aux attaques par impulsions électromagnétiques.

A la figure 1, le deuxième capteur S de la chaîne se trouve à proximité d'une structure inverseuse 10 du circuit intégré. L'inverseur 10 est ciblé par un flux optique ou électromagnétique L1 qui déborde sur le deuxième capteur. La proximité est telle que le flux injecte une faute dans ce capteur, se traduisant par une impulsion qui est propagée vers la bascule FF et une détection de faute.

Un autre inverseur 12 ciblé par un flux L2 se trouve trop loin d'un capteur S, de sorte qu'aucun capteur ne produit d'impulsion et aucune faute n'est détectée.

La figure 2 représente schématiquement un mode de réalisation de chaîne de capteurs permettant d'augmenter le taux de couverture d'un circuit intégré devant les attaques par impulsions électromagnétiques. Des bobinages inductifs 20 sont insérés en série dans les liaisons P entre les capteurs de la chaîne de la figure 1. Les bobinages 20 peuvent être réalisés par des pistes bobinées en spirale plate sur le dernier niveau de métal du circuit intégré. Ces bobinages peuvent alors être placés au-dessus des éléments actifs du circuit sans augmenter la surface du circuit intégré. Chaque bobinage peut ainsi entourer plusieurs zones sensibles rapprochées à protéger.

Chaque bobinage inductif 20 peut être configuré pour générer une tension induite dépassant le seuil de basculement d'une porte logique lorsque le bobinage est soumis à un flux électromagnétique susceptible de provoquer une injection de faute dans le circuit à protéger. Ainsi, lorsqu'une zone sensible du circuit, telle qu'une structure inverseuse 22, est ciblée par une impulsion électromagnétique EM, le flux de l'impulsion peut déborder sur le bobinage 20 le plus proche, voire traverser le bobinage si celui-ci entoure la zone ciblée. La borne du bobinage reliée à l'entrée du capteur S suivant, qui se trouve à haute impédance, présente alors une impulsion de tension induite. L'impulsion est généralement bipolaire, comprenant deux alternances de polarités opposées, comme cela est illustré - l'alternance ayant la bonne polarité déclenche alors le capteur S suivant. Cet événement se propage de capteur en capteur jusqu'à la bascule FF qui signale une faute.

Selon la structure des capteurs optiques S, les bobinages 20 peuvent être connectés ailleurs qu'entre deux capteurs S.

La figure 3 représente schématiquement un détail d'un capteur optique S intégrant un exemple de bascule. La bascule comporte deux inverseurs rebouclés formant un point mémoire de type SRAM. Un transistor MOS peut être prévu pour réinitialiser la bascule à partir du signal RST. Un bobinage inductif 20 peut être connecté entre la sortie d'un premier des inverseurs et l'entrée du deuxième inverseur. Le bobinage 20 peut être connecté, comme cela est représenté, hors du chemin de propagation entre capteurs, de sorte que le bobinage n'affecte pas le signal de propagation.

Les impulsions électromagnétiques utilisées pour injecter des fautes sont d'intensité élevée, apte à générer une tension induite dépassant le seuil de basculement d'une porte élémentaire à l'aide d'une seule boucle de configuration quelconque et discontinue entre des éléments de la porte élémentaire. Ainsi les bobinages 20 n'ont pas besoin d'avoir une inductance élevée pour détecter de telles impulsions. Elles peuvent cependant être configurées pour être sensibles à une fraction du flux, de sorte à détecter des impulsions excentrées par rapport aux bobinages, ciblant des zones à l'extérieur des bobinages.

A titre d'exemple, une inductance d'environ 3 nH permet d'atteindre des résultats satisfaisants. Cette valeur d'inductance peut être atteinte par un bobinage carré en spirale plate d'environ 250 µm de côté, avec trois spires. Au lieu d'être bobinées en spirale sur une seule couche de métal, les spires peuvent être bobinées sur des couches de métal différentes pour former un bobinage solénoïde, dont l'encombrement sera inférieur à celui d'un bobinage en spirale pour une même valeur d'inductance.

Comme on l'a précédemment indiqué, un critère intervenant dans la conception des bobinages 20 est la production d'une tension induite dépassant le seuil de commutation d'une porte logique élémentaire. En effet, c'est le franchissement de ce seuil à l'entrée d'un capteur S qui entraîne la propagation de cet événement pour signaler une faute. On peut souhaiter abaisser ce seuil pour rendre les capteurs plus sensibles. Cela peut être réalisé en abaissant la tension d'alimentation de la chaîne de capteurs S et de la bascule FF - alors que le circuit intégré, incluant l'inverseur 22, est alimenté sous une tension Vdd, la chaîne de capteurs S peut être alimentée sous une tension Vdd2 inférieure à la tension Vdd, comme cela est indiqué entre parenthèses pour le premier capteur S.

La figure 4 est un graphe réalisé à partir de simulations, illustrant la sensibilité des capteurs S en fonction de la tension d'alimentation Vdd2. Ce graphe a été établi pour un bobinage 20 de 3 nH, une sonde d'impulsion électromagnétique de 100 nH, et un coefficient de couplage entre la sonde et le bobinage de 0,01. L'axe vertical représente l'amplitude des impulsions de tension Vem appliquées sur la sonde, et donc l'intensité du flux magnétique des impulsions.

Dans ces conditions de simulation, pour une tension Vdd2 égale à la tension d'alimentation Vdd, ici 1,2 V, il faut une tension Vem supérieure à 350 V sur la sonde pour déclencher la détection. Lorsque la tension Vdd2 est abaissée à 0,85 V, une tension Vem de l'ordre de 230 V suffit pour déclencher la détection.

Dans le mode de réalisation de la figure 2, les bobinages 20 ont été insérés en série dans les lignes de propagation P entre les capteurs. Les bobinages peuvent être insérés dans d'autres lignes du réseau d'interconnexion des capteurs, du moment que la tension induite dans un bobinage provoque une condition de détection de l'un des capteurs S.

La figure 5 représente schématiquement un autre mode de réalisation de réseau de capteurs illustrant d'autres positions possibles des bobinages. Il s'agit, à titre d'exemple, d'un réseau de capteurs du type décrit dans l'article de Sensors 2013 susmentionné, c'est-à-dire un réseau d'amplificateurs tampon 40 appartenant à un arbre de réinitialisation du circuit intégré.

Les amplificateurs 40 reçoivent tous un signal de réinitialisation à état actif bas RST/, soit directement, comme cela est représenté, soit relayé par un autre amplificateur. Les sorties des amplificateurs 40 servant de capteurs sont reliées à des entrées respectives d'une porte NON-ET 42. La sortie de la porte 42 est connectée à la bascule de surveillance FF.

Dans une telle structure, des bobinages 20' de détection de flux électromagnétique peuvent être insérés en série, comme cela est représenté, dans les conducteurs entre la ligne RST/ et les amplificateurs 40, ou entre les amplificateurs 40 et la porte 42. Un autre bobinage pourrait être inséré entre la porte 42 et la bascule FF.

Avec cette configuration, un bobinage 20' soumis à une impulsion électromagnétique génère une impulsion de tension induite sur sa borne à haute impédance. Cette impulsion est transmise vers une entrée de la porte 42, soit directement, soit par un amplificateur 40. Toutes les entrées de la porte 42 sont normalement à 1, plaçant la sortie de la porte à 0. Pendant l'alternance négative de l'impulsion, l'entrée correspondante de la porte 42 est tirée vers 0, provoquant un passage à 1 de la sortie de la porte 42, et la détection de l'événement par la bascule FF.

En fait, le réseau de capteurs de la figure 4 est un réseau parallèle, tandis que le réseau de capteurs des figures 1 et 2 est un réseau série. Quelle que soit la structure du réseau de capteurs, il suffit de connecter chaque bobinage inductif en série avec un capteur pour obtenir la fonctionnalité souhaitée. Les bobinages peuvent également être connectés entre des éléments des capteurs eux-mêmes (figure 3).

## Revendications

1. Circuit intégré protégé contre des attaques par injection de fautes, comprenant :
• un réseau de capteurs optiques (S); et
• une bascule de surveillance (FF) connectée aux capteurs optiques pour signaler une faute lorsqu'au moins un des capteurs optiques change d'état ;
**caractérisé en ce qu'**il comprend des bobinages inductifs (20) connectés dans le réseau, chaque bobinage (20) étant configuré pour générer une tension induite provoquant le basculement d'au moins un des capteurs optiques lorsque le bobinage est soumis à un flux électromagnétique susceptible de provoquer une injection de faute dans le circuit.

2. Circuit intégré selon la revendication 1, dans lequel un bobinage inductif (20) est connecté en série avec un capteur optique respectif.

3. Circuit intégré selon la revendication 1, dans lequel un capteur optique comprend une bascule et l'un des bobinages inductifs (20) est connecté entre des éléments de la bascule.

4. Circuit intégré selon la revendication 1, dans lequel un bobinage inductif est plat et formé par des pistes bobinées en spirale sur un niveau de métal du circuit.

5. Circuit intégré selon la revendication 1, dans lequel un bobinage inductif est un solénoïde formé par des pistes bobinées sur différents niveaux de métal du circuit.

6. Circuit intégré selon la revendication 1, dans lequel les capteurs optiques (S) sont alimentés à une tension (Vdd2) inférieure à la tension d'alimentation nominale (Vdd) du circuit intégré.

7. Circuit intégré selon la revendication 1, dans lequel les capteurs optiques (S) sont connectés en chaîne et les bobinages sont insérés dans des liaisons entre les capteurs.

## Patentansprüche

1. Integrierte Schaltung, die gegen Fehlerinjektionsangriffe geschützt ist, umfassend:
- ein Netzwerk von optischen Sensoren (S); und
- eine mit den optischen Sensoren verbundene Überwachungsumschaltung (FF), um einen Fehler zu signalisieren, wenn mindestens einer der optischen Sensoren den Zustand ändert;
**dadurch gekennzeichnet, dass** sie induktive Wicklungen (20) umfasst, die im Netzwerk verbunden sind, wobei jede Wicklung (20) konfiguriert ist, um eine induzierte Spannung zu erzeugen, die bewirkt, dass mindestens einer der optischen Sensoren umschaltet, wenn die Wicklung einem elektromagnetischen Fluss ausgesetzt ist, der eine Fehlereinspeisung in die Schaltung verursachen kann.

2. Integrierte Schaltung nach Anspruch 1, wobei eine induktive Wicklung (20) mit einem entsprechenden optischen Sensor in Reihe geschaltet ist.

3. Integrierte Schaltung nach Anspruch 1, wobei ein optischer Sensor eine Umschaltung umfasst und eine der induktiven Wicklungen (20) zwischen Elementen der Umschaltung verbunden ist.

4. Integrierte Schaltung nach Anspruch 1, wobei eine induktive Wicklung flach und durch spiralförmig gewickelte Bahnen auf einer Metallebene der Schaltung gebildet ist.

5. Integrierte Schaltung nach Anspruch 1, wobei eine induktive Wicklung ein Magnet ist, der aus Bahnen gebildet wird, die auf verschiedenen Metallebenen der Schaltung gewickelt sind.

6. Integrierte Schaltung nach Anspruch 1, wobei die optischen Sensoren (S) mit einer Spannung (Vdd2) versorgt werden, die niedriger ist als die nominale Versorgungsspannung (Vdd) der integrierten Schaltung.

7. Integrierte Schaltung nach Anspruch 1, wobei die optischen Sensoren (S) in Kette verbunden sind und die Wicklungen in Verbindungen zwischen den Sensoren eingesetzt sind.

## Claims

1. An integrated circuit protected against fault-injection attacks, comprising:
• a network of optical sensors (S); and
• a surveillance flip-flop (FF) connected to the optical sensors for signaling a fault when at least one of the optical sensors changes state;
**characterized in that** it comprises inductive windings (20) connected in the network, each winding (20) configured to generate an induced voltage causing the switching of at least one of the optical sensors when the winding is subjected to an electromagnetic flux capable of causing a fault-injection in the circuit.

2. The integrated circuit of claim 1, wherein an inductive winding (20) is connected in series with a respective optical sensor.

3. The integrated circuit of claim 1, wherein an optical sensor comprises a latch and one of the inductive windings (20) is connected between elements of the latch.

4. The integrated circuit of claim 1, wherein an inductive winding is flat and formed by tracks wound in a spiral on a metal level of the circuit.

5. The integrated circuit of claim 1, wherein an inductive winding is a solenoid formed by tracks wound on different metal levels of the circuit.

6. The integrated circuit according to claim 1, wherein the optical sensors (S) are powered at a voltage (Vdd2) lower than the nominal power supply voltage (Vdd) of the integrated circuit.

7. The integrated circuit of claim 1, wherein the optical sensors (S) are connected in a chain and the windings are inserted in links between the sensors.
